Europäisches Patentamt

European Patent Office

Office européen des brevets

(11) Numéro de publication: **0 360 944**
**A1**

## (12) DEMANDE DE BREVET EUROPEEN

(21) Numéro de dépôt: **88402462.1**

(51) Int. Cl.5: **A01N 1/02**

(22) Date de dépôt: **29.09.88**

(43) Date de publication de la demande:
**04.04.90 Bulletin 90/14**

(84) Etats contractants désignés:
**AT BE CH DE ES FR GB GR IT LI LU NL SE**

(71) Demandeur: **CELASTER SOCIETE ANONYME DITE:**
**B.P. No 1 Celle l'Evescault**
**F-86600 Lusignan(FR)**

(72) Inventeur: **Gargouil, Yves Michel**
**La Grange/Celle l'Evescault**
**F-86600 Lusignan(FR)**

(74) Mandataire: **Jolly, Jean-Pierre et al**
**Cabinet BROT et JOLLY 83, rue d'Amsterdam**
**F-75008 Paris(FR)**

(54) **Dispositif à enceinte de survie pour organes vivants isolés.**

(57) La présente invention concerne un dispositif à enceinte de survie pour organes vivants isolés.

Ce dispositif comprend une enceinte (1) contenant lesdits organes et une cuve fermée (3) entourant ladite enceinte pour la maintenir à température adéquate thermorégulée. L'enceinte (1) est montée de façon amovible sur la cuve (3).

Application à l'élaboration de tests et mesures pharmacologiques sur des organes vivants isolés.

FIG.1

EP 0 360 944 A1

## Dispositif à enceinte de survie pour organes vivants isolés.

La présente invention concerne une enceinte de survie pour des organes vivants isolés tels que tissus animaux, humains et autres, plus particulièrement destinée à permettre l'élaboration de tests pharmacologiques sur ces derniers.

On sait que de telles enceintes servent, d'une part, à contenir le liquide de survie nécessaire aux organes, et, d'autre part, à recevoir les substances pharmacologiques permettant de mener lesdits tests pharmacologiques.

Jusqu'à présent, ces enceintes étaient mises à température thermorégulée par une cuve extérieure fermée entourant ladite enceinte de façon étanche et contenant le liquide caloporteur de régulation de température, l'enceinte étant fabriquée solidairement avec la cuve.

Cependant, les risques de contamination biologique et chimique de l'enceinte dus en particulier aux investigations pharmacologiques nécessitent le renouvellement fréquent des enceintes et ainsi de devoir jeter à chaque fois l'enceinte et la cuve de thermorégulation attenante dont l'ensemble est de fabrication relativement coûteuse.

L'invention vise à remédier à cet inconvénient et a pour objet un dispositif de faible encombrement destiné à recevoir et assurer la survie d'organes isolés en vue de mesures pharmacologiques, comprenant une enceinte contenant lesdits organes et une cuve fermée entourant ladite enceinte pour la maintenir à température adéquate thermorégulée, caractérisé en ce que l'enceinte est montée de façon amovible sur la cuve.

Il résulte de cette disposition que l'enceinte, qui seule présente le risque de contamination, peut être jetée indépendamment de la cuve de thermorégulation. On réduit déjà considérablement par cette mesure le coût des traitements pharmacologiques.

Selon des caractéristiques avantageuses de l'invention, l'enceinte est cylindrique et la cuve comprend sur ses faces inférieure et supérieure deux perçages coaxiaux de diamètre sensiblement équivalent à celui de l'enceinte, ces perçages étant formés chacun avec une gorge interne munie d'un joint torique d'étanchéité, de telle sorte que ladite enceinte puisse être montée coulissante avec étanchéité dans la cuve par l'intermédiaire desdits perçages, l'espace interne compris entre la cuve et l'enceinte en position de service étant occupé par le liquide caloporteur de thermorégulation de l'enceinte. L'enceinte ainsi montée est retenue sur la cuve par les joints d'étanchéité, lesquels sont appliqués de façon relativement serrée sur la paroi de l'enceinte.

L'ouverture supérieure de l'enceinte qui émerge de la face supérieure de la cuve reçoit un chapeau de distribution duquel partent divers tuyaux permettant le remplissage de l'enceinte, l'injection des divers produits de test, le renouvellement en continu du liquide de survie et le contrôle de niveau du liquide. Ce chapeau est fixé sur la cuve par une simple vis vissée sur la paroi supérieure de la cuve. Ce chapeau comprend un évidement interne formant butée lors de la mise en place de l'enceinte dans la cuve et permettant une mise à hauteur constante de l'enceinte sur la cuve.

Enfin, l'enceinte est usinée très facilement, fraisée ou moulée à partir d'une matière synthétique peu coûteuse, ce qui minimise le coût des traitements lorsque l'enceinte doit être jetée après chaque essai.

L'invention est illustrée ci-après à l'aide d'un exemple de réalisation et avec référence aux dessins annexés sur lesquels:

   - La figure 1 est une vue en perspective d'un dispositif à enceinte de survie selon invention ;

   - La figure 2 est une vue en coupe de ce dispositif, l'enceinte étant démontée;

   - La figure 3 est une vue en coupe du dispositif en position de service, l'enceinte étant montée sur la cuve et

   - La figure 4 est une vue de la pièce support d'organe fixée sur l'enceinte.

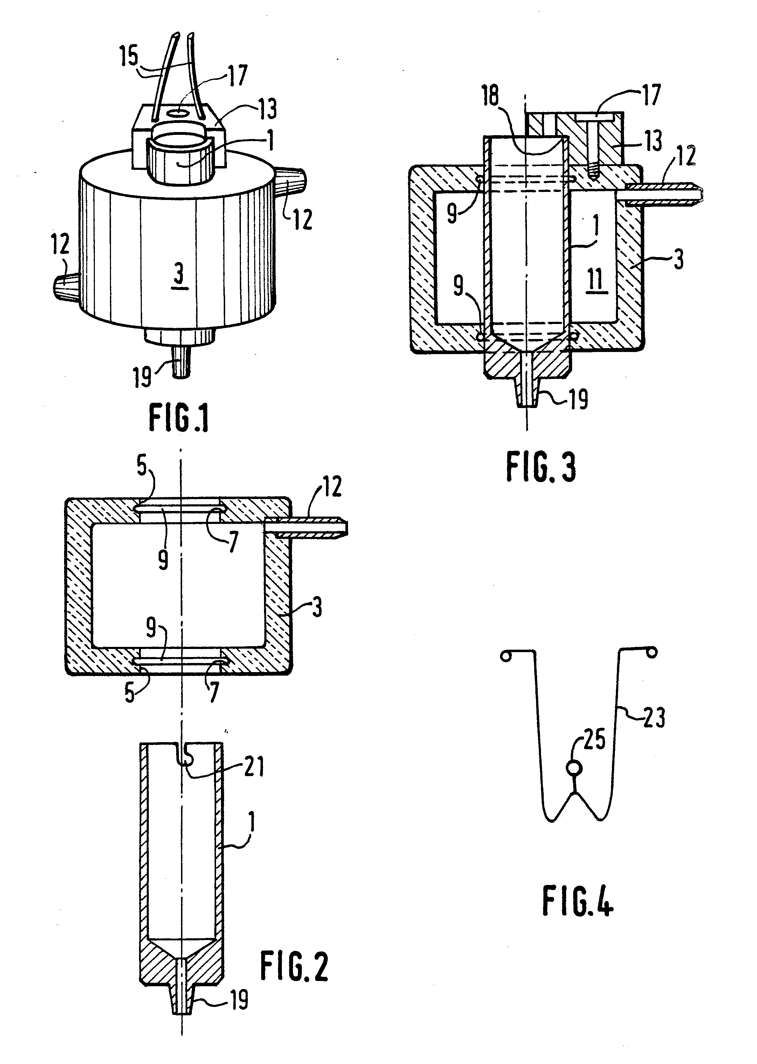

Comme représenté sur les figures 1 à 3, le dispositif à enceinte de survie selon l'invention comprend une enceinte cylindrique 1 recevant les organes à étudier, et une cuve 3 également cylindrique, prévue pour maintenir l'enceinte 1 à une température adéquate thermorégulée.

La cuve 3 comporte sur ses faces supérieures et inférieures deux perçages coaxiaux 5 (figure 2) formés au diamètre de l'enceinte de telle manière que cette dernière puisse être montée par simple coulissement sur la cuve (figure 3). Ces perçages 5 sont munis d'une gorge 7 recevant un joint torique 9 lequel s'applique avec étanchéité sur la paroi cylindrique de l'enceinte. La pression de ces joints 9 sur l'enceinte permet de la maintenir en position relativement à la cuve. La chambre 11 formée entre l'enceinte et la paroi interne de la cuve reçoit le liquide caloporteur permettant de maintenir à une valeur relativement constante la température du milieu de survie de l'organe enfermé dans l'enceinte. Ce liquide est mis en circulation dans la cuve par un circuit duquel on a seulement représenté les raccords 12 d'entrée et de sortie.

L'enceinte est ouverte à son extrémité supérieure, laquelle émerge largement de la face supérieure de la cuve.

Un chapeau supérieur 13 muni de tuyaux souples 15 d'alimentation de l'enceinte en liquides de survie et produits de test ferme partiellement l'enceinte. Ce chapeau 13, fixé par une vis 17 sur la face supérieure de la cuve, comporte en outre un évidement 18 qui forme en outre un élément de butée pour l'enceinte limitant la hauteur de son positionnement à une valeur adéquate lors de son montage.

L'enceinte comprend également de façon classique à sa partie inférieure une ouverture de vidange 19 (reliée à un tuyau non représenté) et deux encoches 21 pour le positionnement de la pièce 23 support d'organe 25 (figure 4), laquelle est constituée d'un fil inox sensiblement en forme de U. Ce système permet un montage rapide des organes.

La présente invention apporte ainsi un dispositif à enceinte de survie qui, grâce à l'agencement amovible de l'enceinte de survie , permet de réduire notablement le coût des traitements pratiqués.

## Revendications

1.- Dispositif destiné à recevoir et assurer la survie d'organes vivants isolés en vue de mesures pharmacologiques, comprenant une enceinte (1) contenant lesdits organes et une cuve fermée (3) entourant ladite enceinte pour la maintenir à température adéquate thermorégulée, caractérisé en ce que l'enceinte (1) est montée de façon amovible sur la cuve (3).

2.- Dispositif à enceinte de survie selon la revendication 1, caractérisé en ce que l'enceinte (1) est cylindrique et la cuve (3) comporte sur ses faces supérieure et inférieure deux perçages coaxiaux (5) de diamètre sensiblement équivalent à celui de l'enceinte (1), ces perçages (5) étant formés chacun avec une gorge interne (7) munie d'un joint torique d'étanchéité (9), de telle sorte que ladite enceinte (1) peut être montée coulissante avec étanchéité dans la cuve (3) par l'intermédiaire desdits perçages (5), l'espace interne (11) compris entre la paroi interne de la cuve (3) et l'enceinte (1) étant occupé par le liquide caloporteur de thermorégulation de l'enceinte (1).

3.- Dispositif à enceinte de survie selon l'une des revendications 1 ou 2, caractérisé en ce que l'enceinte (1) est retenue sur la cuve (3) par les joints toriques d'étanchéité (9), lesquels sont appliqués de façon relativement serrée sur la paroi de l'enceinte (1).

4.- Dispositif à enceinte de survie selon l'une des revendications précédentes, caractérisé en ce que l'enceinte (1) est ouverte à sa partie supérieure, laquelle en position de service émerge largement de la face supérieure de la cuve (3).

5.- Dispositif à enceinte de survie selon la revendication 4, caractérisé en ce que l'ouverture de l'enceinte reçoit un chapeau de distribution (13) muni de divers tuyaux (15) permettant le remplissage de l'enceinte (1) en liquide de survie, l'injection des divers produits de test et le contrôle de niveau du liquide.

6.- Dispositif à enceinte de survie selon la revendication 5, caractérisé en ce que le chapeau (13) ferme partiellement l'ouverture de l'enceinte (1), étant fixé par une vis (17) en prise sur le corps de la cuve (3).

7.- Dispositif à enceinte de survie selon l'une des revendications 5 et 6, caractérisé en ce que ledit chapeau (13) comprend un évidement interne (18) formant butée lors de la mise en place de l'enceinte (1) dans la cuve (3) et permettant ainsi une mise à hauteur adéquate constante de l'enceinte (1) sur la cuve.

8.- Dispositif à enceinte de survie selon l'une des revendications précédentes, caractérisé en ce que l'enceinte (1) est issue d'usinage ou de moulage à partir d'un matériau synthétique.

9.- Dispositif à enceinte de survie selon la revendication 1, caractérisé en ce que l'enceinte (1) comprend à sa partie supérieure des encoches (21) pour le montage rapide d'une pièce (23) support desdits organes (25).

FIG.1

FIG.2

FIG.3

FIG.4

Office européen des brevets

**RAPPORT DE RECHERCHE EUROPEENNE**

Numero de la demande

EP 88 40 2462

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| X | US-A-3 810 367 (W.D. PETERSON) <br> * Figures; revendications * <br> --- | 1 | A 01 N 1/02 |
| A | US-H- 522 009 (R.A. CLARK) <br> --- | | |
| A | FR-A-2 218 830 (INSTITUT DE LA SANTE ET DE LA RECHERCHE MEDICALE) <br> * Figures; revendications * <br> ----- | 1 | |

DOMAINES TECHNIQUES RECHERCHES (Int. Cl.3)

A 01 N

Le présent rapport a été établi pour toutes les revendications

| Lieu de la recherche | Date d'achèvement de la recherche | Examinateur |
|---|---|---|
| LA HAYE | 31-05-1989 | COUCKE A.O.M. |